(19) **Europäisches Patentamt European Patent Office Office européen des brevets**

(11) **EP 4 429 006 A1**

(12) # EUROPEAN PATENT APPLICATION
published in accordance with Art. 153(4) EPC

(43) Date of publication:
**11.09.2024 Bulletin 2024/37**

(21) Application number: **23860334.4**

(22) Date of filing: **29.08.2023**

(51) International Patent Classification (IPC):
***H01M 50/293*** (2021.01)     ***H01M 50/291*** (2021.01)

(52) Cooperative Patent Classification (CPC):
**H01M 50/291; H01M 50/293;** Y02E 60/10

(86) International application number:
**PCT/JP2023/031197**

(87) International publication number:
**WO 2024/048572 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2022   JP 2022137951**

(71) Applicant: **Sumitomo Riko Company Limited Komaki-shi, Aichi 485-8550 (JP)**

(72) Inventors:
• **MORIHARA, Koji**
**Komaki-shi, Aichi 485-8550 (JP)**

• **FUKAGAWA, Shigeru**
**Komaki-shi, Aichi 485-8550 (JP)**
• **NIMURA, Yasunori**
**Komaki-shi, Aichi 485-8550 (JP)**
• **KUMAGAI, Shinji**
**Komaki-shi, Aichi 485-8550 (JP)**
• **OYAMA, Yukio**
**Komaki-shi, Aichi 485-8550 (JP)**

(74) Representative: **Müller-Boré & Partner Patentanwälte PartG mbB Friedenheimer Brücke 21 80639 München (DE)**

(54) **ELASTIC MEMBER FOR BATTERY PACK AND METHOD FOR MANUFACTURING SAME**

(57)     An elastic member for battery pack (4) is arranged in a battery pack (1) in which multiple battery cells (2) are arranged side by side in a predetermined direction and is in elastic contact with the battery cells (2). The elastic member for battery pack (4) is made of a foam that satisfies the following (a) to (d): (a) an Asker C hardness is 20 or more and 40 or less; (b) a foaming ratio is 3.0 times or more and 5.0 times or less; (c) a closed cell ratio is 50% or more and 95% or less; (d) with a direction of elastic contact with a battery cell 2 as a thickness direction, a structure of a bubble in a cross-section in the thickness direction has an elliptical bubble having an elongated elliptical shape in the thickness direction.

FIG. 1

EP 4 429 006 A1

**Description**

BACKGROUND

Technical Field

The disclosure relates to an elastic member arranged between adjacent battery cells in a battery pack accommodating multiple battery cells, and a manufacturing method of the elastic member.

Related Art

Hybrid vehicles and electric vehicles are equipped with a battery pack accommodating multiple battery cells. In a battery pack, a battery module formed by stacking multiple battery cells is accommodated in a housing while being fixed by fastening members from both sides in the stacking direction. In order to suppress misalignment of battery cells due to vibrations when the vehicle is running, and to absorb deformation (expansion, contraction) of battery cells due to charging and discharging, an elastic member that may be elastically deformed following the deformation of the battery cells is arranged between adjacent battery cells.

For instance, Patent Document 1 describes a multilayer sheet arranged between adjacent battery cells. As shown in Figure 3 of Patent Document 1, the multilayer sheet is formed by stacking first heat conductive sheet/heat insulating sheet/rubber sheet/heat insulating sheet/first heat conductive sheet in the stacking direction of battery cells. The rubber sheet has cushioning properties, improves the adhesion between the battery cells and the first heat conductive sheet, and suppresses damage to the first heat conductive sheet and the heat insulating sheet due to load. As the rubber sheet, a silicone rubber foam sheet is mentioned. Further, Patent Document 2 describes a sheet-shaped pressing member that is arranged between adjacent battery cells for pressing the battery cells against a wall surface of a cell accommodating space.

Citation List

Patent Literature

[Patent Literature 1] Japanese Patent Laid-open No. 2021-99940A
[Patent Literature 2] Japanese Patent Laid-open No. 2020-64795A

SUMMARY OF INVENTION

Technical Problem

An elastic member is required to sufficiently exhibit battery performance by elastically deforming following the expansion and contraction of battery cells caused by charging and discharging. That is, the battery cell is fixed by a biasing force of the elastic member when being charged (expanded), and when the battery cell is discharged (contracted), the elastic member needs to be able to absorb the deformation of the battery cell by compressing and deforming itself.

For instance, paragraph [0049] of the above-mentioned Patent Document 2 describes that a pressing member includes a rubber or resin foam, and paragraph [0050] describes that the degree of absorption of a pressing force against the battery cell and an expansion force of the battery cell is adjusted by the foaming ratio of the foam. However, for instance, when the foaming ratio is reduced, the content ratio of bubbles decreases and the foam becomes harder. As a result, a stress (repulsive force) during compression increases, making it difficult for the elastic member (foam) to be compressed and deformed. On the contrary, when the foaming ratio is increased, the content ratio of bubbles increases and the hardness of the foam decreases. As a result, the stress during compression decreases, the elastic member is easily compressed, and the deformation caused by expansion of the battery cell can be absorbed, but the repulsive force at low compression decreases, and the biasing force on the battery cell is insufficient. As described above, it is difficult to achieve both fixation of battery cells during contraction and absorption of deformation during expansion by simply adjusting the foaming ratio.

The disclosure has been made in view of the above circumstances, and an object of the disclosure is to provide an elastic member for battery pack capable of both fixing battery cells and absorbing deformation of the battery cells during expansion, and a manufacturing method of the same.

Solution to Problem

(1) In order to solve the above issues, the elastic member for battery pack according to the disclosure is an elastic member for battery pack that is arranged in a battery pack in which multiple battery cells are arranged side by side in a predetermined direction and is in elastic contact with the battery cells. The elastic member for battery packing is made of a foam that satisfies the following (a) to (d):

(a) an Asker C hardness is 20 or more and 40 or less;
(b) a foaming ratio is 3.0 times or more and 5.0 times or less;
(c) a closed cell ratio is 50% or more and 95% or less; and
(d) with a direction of elastic contact with the battery cells as a thickness direction, a structure of a bubble in a cross-section in the thickness direction has an elliptical bubble having an elongated elliptical shape in the thickness direction.

In the elastic member for battery pack (hereinafter sometimes simply referred to as "elastic member") of the disclosure, by optimizing the hardness and bubble structure of the foam as a material, both the restraining force when the battery cell (hereinafter simply referred to as "cell") is contracted, and deformation absorption when the battery cell is expanded are achieved.

First, by setting the Asker C hardness within a range of (a), the hardness required as an elastic member is ensured. As a result, even if the battery cell contracts, the biasing force applied to the cell is unlikely to decrease, and the cell can be fixed. Second, by setting the foaming ratio to a range of (b), the closed cell ratio (independent air bubble ratio) to a range of (c), and the shape of bubble to a shape specified in (d), the stress main high compression is reduced. As a result, the elastic member can be easily compressed when the battery cell expands, and deformation due to the expansion of the cell can be absorbed.

(2) In the above configuration, a ratio of a major axis to a minor axis (major axis/minor axis) of the elliptical bubble may be 1.4 or more and 3.0 or less. According to the configuration, the shape of the elliptical bubble observed in the cross-section in the thickness direction may be made into a desired elliptical shape. The configuration is suitable for achieving both the hardness of the elastic member and the stress decrease during high compression.

(3) In any of the above configurations, an average diameter of the bubbles in the cross-section of the foam in the thickness direction may be 250 $\mu$m or more and 600 $\mu$m or less. According to the configuration, the size of the bubble in the foam may be made to a desired size. The configuration is suitable for achieving both the hardness of the elastic member and the stress decrease during high compression.

(4) In any of the above configurations, a thickness of the elastic member may be 3 mm or more and 5 mm or less. According to the configuration, since the elastic member is thin, it is suitable for arrangement in a limited space within the battery pack. Further, according to the configuration, even if the battery cell expands significantly, the distance between adjacent battery cells can be secured via the elastic member, and insulation between the cells can be maintained. Moreover, the effects will be better when the configurations (1) to (4) above are all combined.

(5) A manufacturing method of the elastic member for battery pack according to the disclosure, which is one form of the manufacturing method of the elastic member for battery pack according to the disclosure, includes: a raw material composition arranging step of arranging a raw material composition of the foam in a mold; a sheet member arranging step of arranging a sheet member on a surface of the raw material composition; and a foam molding step of foam molding the raw material composition with a surface covered with the sheet member.

In the manufacturing method of the disclosure, foam molding is performed with a sheet member arranged on the surface of the raw material composition. Thereby, foaming reaction in a surface direction (direction perpendicular to the thickness direction) of the raw material composition is restricted. As a result, the bubble easily grows in the thickness direction during the foaming reaction, and an elliptic spherical bubble with a long axis (maximum length) oriented in the thickness direction can be formed. Further, even if the foaming ratio is increased, a sheet-shaped foam can be formed.

Effects

According to the elastic member for battery pack of the disclosure, both the fixing of battery cells and absorb deformation during expansion can be achieved. According to the manufacturing method of the disclosure, since the growth direction of bubbles during the foaming reaction may be controlled and the foaming ratio may be increased, the elastic member for battery pack of the disclosure can be manufactured relatively easily and at low cost.

BRIEF DESCRIPTION OF DRAWINGS

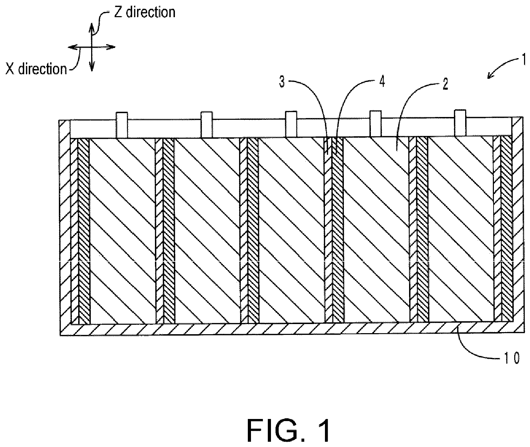

Figure 1 is a schematic cross-sectional diagram of a battery pack in which an elastic member of the disclosure is arranged.

DESCRIPTION OF EMBODIMENTS

Hereinafter, embodiments of the elastic member for battery pack and the manufacturing method thereof of the disclosure will be described. The embodiments are not limited to the following, and may be implemented in various modifications and improvements that can be performed by those skilled in the art.

<Elastic member for battery pack>

An elastic member of the disclosure is arranged a battery pack in which multiple battery cells are arranged side by side in a predetermined direction and is in elastic contact with battery cells in. In the battery pack to which the elastic member of the disclosure is applied, the type of battery cell is not particularly limited. Examples include lithium ion batteries, nickel metal hydride batteries, and the like. In the battery pack, components other than the battery cells and the elastic member are not particularly limited. For instance, the battery pack may be configured by stacking multiple cells and elastic members to form a battery module, and accommodating the battery module in a housing together with fastening members that tighten the module from both sides in the stacking direction.

The arrangement form of the elastic member of the disclosure and the size relative to the battery cell are not particularly limited. The elastic member may be arranged between adjacent cells in the stacking direction, or may be arranged between the cells at both ends in the stacking direction and the fastening members. The elastic member of the disclosure may be in "a state in which of being in elastic contact with a battery cell" either directly or indirectly. That is, the elastic member of the disclosure may be in direct contact with the battery cell, or may be in indirect contact with the battery cell, for instance, via a heat insulating sheet. The elastic member may or may not need to be fixed to an adjacent member. In a case of fixing, adhesive or double-sided tape may be used for attaching or crimping.

The thickness of the elastic member may be appropriately determined in consideration of arrangement space, ensuring insulation between cells, and the like. For instance, from the viewpoint of thinning, a thickness of 6 mm or less is desirable, and 5 mm or less is even more desirable. On the other hand, from the viewpoint of ensuring a sufficient distance between cells adjacent via the elastic member when the cells expand, a distance of 2 mm or more is desirable, and 3 mm or more is even more desirable. Moreover, the elastic member may vary in dimensions such as thickness depending on the location where it is arranged in the battery pack.

The elastic member of the disclosure is made of a foam that satisfies the following (a) to (d).

  (a) the Asker C hardness is 20 or more and 40 or less.

In a case where the foam has an Asker C hardness of less than 20, repulsive force at low compression is small, so the biasing force against the battery cell may be insufficient and misalignment or the like may not be sufficiently suppressed. Thus, a preferable Asker C hardness is 25 or more. On the other hand, is the foam has an Asker C hardness of more than 40, compressive stress of the foam (elastic member) increases, and deformation following the expansion of the battery cell becomes difficult. Thus, a preferable Asker C hardness is 38 or less.

In this specification, for the Asker C hardness of the foam, a value obtained by the following measurement method using a type C hardness tester (for instance, "Asker Durometer Type C" manufactured by Kobunshi Keiki Co., Ltd.) is adopted. The measurement method is as follows: prepare a test piece with a thickness of 10 mm, press an indenter of the type C hardness tester against the center of the test piece with a load of 1 kgf (9.81 N), and measure the value after 3 seconds.

(b) the foaming ratio is 3.0 times or more and 5.0 times or less.

In a case where the foam has a foaming ratio of less than 3.0 times, there are few bubbles and it is close to solid, so the compressive stress of the foam increases, and deformation following the expansion of the battery cell becomes difficult. Thus, a preferable foaming ratio is 3.1 times or more. On the other hand, when the foam has a foaming ratio of more than 5.0 times, there are more bubbles and its hardness decreases, and the repulsive force at low compression decreases. As a result, the biasing force against the battery cell may be insufficient and misalignment or the like may not be sufficiently suppressed. Thus, a preferable foaming ratio is 4.9 times or less.

The foaming ratio of the foam may be calculated by measuring the densities before and after foam molding in the process of manufacturing the foam, using the following formula (I).

$$\text{Foaming ratio} = \text{density of raw material composition of foam} / \text{density of foam} \dots \text{(I)}$$

(c) the closed cell ratio is 50% or more and 95% or less.

In a case where the foam has a closed cell ratio of less than 50%, there are more continuous bubbles and more air entering and exiting the foam and its hardness decreases, and the repulsive force at low compression decreases. Thus, a preferable closed cell ratio is 60% or more, and more preferably 65% or more. On the other hand, when the closed cell ratio of the foam is more than 95%, the compressive stress of the foam may become too large. Thus, a preferable closed cell ratio is less than 90%, more preferably 88% or less.

In this specification, a value measured by the following method is adopted as the closed cell ratio of the foam. In the measurement method, the "foam" and the "solid body" are both polymers, and differ only in the presence or absence of a foaming agent.

(i) Cut out a dice-shaped test piece with a side of 1 to 2 cm from both the foam and the solid body. The test piece will be used for the following measurements. First, the density of the foam, the density of the solid body, and the dry mass of the foam are measured. The mass and the density are measured at 23°C (the same applies below).
(ii) Submerge the foam in water, reduce the pressure to about 4 kPa (30 mmHg), and leave it for 3 minutes. Return the pressure to normal and leave the foam as it is for another 3 minutes, then it out and wipe of the moisture on the surface, and measure the mass of the foam after water absorption.
(iii) Obtain an open cell ratio using the following formula, and calculate the closed cell ratio from the value.

If the dry mass of the foam is $W_{dry}$ (g), the mass of the foam after water absorption is $W_{wet}$ (g), the density of the foam is $D_f$ (g/cm$^3$), and the density of the solid body is $D_s$ (g/cm$^3$), a total volume A (cm$^3$) of the bubbles is $[A=(W_{dry}/D_f)-(W_{dry}/D_s)]$. Further, in a case where the density of water is 1 g/cm$^3$, a volume B (cm$^3$) of an open-cell bubble is $[B=W_{wet} - W_{dry}]$. Since the open cell ratio is the volume ratio of the open-cell bubble to the total volume of the bubbles, the open cell ratio (%) is [open cell ratio=$100\times(B/A)$]. Further, the closed cell ratio (%) is calculated by [closed cell ratio = 100 - open cell ratio].

(d) with the direction of elastic contact with the battery cells as the thickness direction, the structure of the bubble in the cross-section in the thickness direction has an elliptical bubble has an elongated elliptical shape in the thickness direction.

The shape of bubble in the foam may be identified by observing the cross-section in the thickness direction with a microscope. The elliptical bubble is considered to be a bubble formed in an elliptic spherical shape when a spherical bubble is stretched by stress acting in the thickness direction or compressed by stress acting in a direction perpendicular to the thickness direction during foam molding. The compressive stress in the thickness direction of the foam may be further reduced in a case where elliptical bubbles are present in the cross-section in the thickness direction, that is, where the foam has elliptic spherical bubbles with a long axis oriented in the thickness direction, than in a case where such bubbles are absent or few. Thus, significant compression of the foam during expansion of the battery cell becomes possible, and the deformation caused by the expansion of the cell can be absorbed.

The degree of flatness of the elliptical bubble is not particularly limited. For instance, it is desirable that the ratio of major axis to minor axis (major axis/minor axis will be referred to as "aspect ratio" hereinafter) of an elliptical bubble in the cross-section in the thickness direction is 1.4 or more and 3.0 or less. The aspect ratio of the elliptical bubble may be calculated by taking a microscopic photograph of the cross-section in the thickness direction of the foam, taking the maximum length of the observed elliptical bubble as the major axis, taking the length of the perpendicular bisector of the major axis as the minor axis, and dividing the major axis by the minor axis. For the elastic member of the disclosure, it is desirable that an average value of the aspect ratio of bubbles obtained with a solidity of 0.84 or more as a threshold value be 1.4 or more after the obtained microscopic photograph is subject to binarization and noise removal processing by image analysis.

The bubbles observed in the cross-section in the thickness direction of the foam may be all elliptical bubbles, or they may be a mixture of elliptical bubbles, circular bubbles, or other irregularly shaped bubbles. From the viewpoint of reducing compressive stress, the average diameter of the bubbles observed in the cross-section in the thickness direction is desirably 250 $\mu$m or more, and more preferably 320 $\mu$m or more. On the other hand, from the viewpoint of ensuring desired hardness, it is desirably 600 $\mu$m or less, and more preferably 550 $\mu$m or less. The average diameter of the bubbles is a value obtained by taking a microscopic photograph of a cross-section in the thickness direction of the foam at a magnification of 100 times, measuring the maximum length of each observed bubble, and calculating the average value.

In addition to the above-mentioned properties (a) to (d), it desirable that the elastic member of the disclosure has, for instance, the following physical properties (e) and (f).

(e) The density is 250 kg/m$^3$ or more and 500 kg/m$^3$ or less.

In a case where the foam has a density of less than 250 kg/m$^3$ (0.25 g/cm$^3$), the hardness of the foam decreases and the repulsive force at low compression decreases. As a result, the biasing force against the battery cell may be insufficient and misalignment or the like may not be sufficiently suppressed. On the other hand, in a case where the foam has a density of more than 500 kg/m$^3$ (0.5 g/cm$^3$), the compressive stress of the foam increases, and deformation following the expansion of the battery cell becomes difficult.

(f) The 25% compressive stress is 0.235 MPa or more and 1.015 MPa or less.

The 25% compressive stress is the force required to compress the foam by 25% (until the thickness becomes 3/4) in the thickness direction (direction of elastic contact with the battery cell). In a case where the 25% compressive stress of the foam is less than 0.235 MPa, the repulsive force at low compression is small, so the biasing force against the battery cells may be insufficient and misalignment or the like may not be sufficiently suppressed. On the other hand, in a case where the foam has a 25% compressive stress of larger than 1.015 MPa, deformation following the expansion of the battery cell becomes difficult. In this specification, the 25% compressive stress is a value measured according to method C defined in JIS K6254:2016.

An embodiment of the elastic member of the disclosure will be shown below. Figure 1 is a schematic cross-sectional diagram of a battery pack in which an elastic member of the disclosure is arranged. Regarding the direction in the diagram, the direction in which the battery cells are lined up (thickness direction, stacking direction of each member) is the X direction, and of the two directions perpendicular to the X direction, the longitudinal direction of the battery cell is the Y direction, and the transverse direction (direction corresponding to the direction of gravity) is the Z direction. First, the configuration of the battery pack of this embodiment will be described. As shown in Figure 1, a battery pack 1 includes a housing 10, multiple battery cells 2, a heat insulating material 3, and an elastic member 4.

The housing 10 is made of metal and has a box shape. The multiple battery cells 2 are made of lithium ion batteries and are accommodated in the housing 10. The multiple battery cells 2 each have a rectangular thin plate shape and are stacked in the thickness direction (X direction). The heat insulating material 3 has a rectangular sheet shape with a thickness of 2 mm. The heat insulating material 3 has a heat insulating layer containing silica aerogel. Between adjacent battery cells 2, the heat insulating material 3 is in contact with one side of the battery cell 2, that is, Y-Z plane. The elastic member 4 has a rectangular sheet shape with a thickness of 4.5 mm. The elastic member 4 is made of a silicone rubber foam that satisfies the above-mentioned conditions (a) to (d). Between adjacent battery cells 2, the elastic member 4 is in elastic contact with one side (Y-Z plane) of the battery cell 2. The heat insulating material 3 and the elastic member 4 are arranged in a stacked state in the thickness direction (X direction) between adjacent battery cells 2 and between the battery cells 2 and the housing 10 at both ends in the X direction.

Next, the effects of the elastic member and battery pack of this embodiment will be described. The elastic member 4 is into elastic contact with the battery cells 2 and repeats compression and restoration following the expansion and contraction of the battery cell 2 during charging and discharging. As a result, misalignment of the battery cells 2 when the vehicle is running is suppressed, and deformation due to expansion of the battery cells 2 is absorbed. As a result, the performance of the battery cell 2 can be fully demonstrated. Further, in a case where the temperature of one battery cell 2 rises for some reason, if the heat is transferred to the adjacent battery cell 2, the chain of heat may led to a serious problem. In this regard, in this embodiment, by arranging the heat insulating material 3 together with the elastic member 4, the heat insulating effect of the heat insulating material 3 is exhibited, and the chain of heat can be avoided.

<Manufacturing method of elastic member for battery pack>

The manufacturing method of the elastic member of the disclosure is not particularly limited. As one form of a suitable manufacturing method, the manufacturing method of the elastic member of the disclosure includes a raw material composition arranging step, a sheet member arranging step, and a foam molding step. Each step will be described below.

[Raw material composition arranging process]

This step is a step in which the raw material composition of the foam is arranged in a mold. The raw material composition contains, in addition to the base polymer of the foam, a crosslinking agent, a catalyst, a foaming agent, a foam stabilizer, and the like, if necessary. The raw materials may be mechanically stirred using a propeller or the like in advance to form a raw material composition and then poured into a mold. The type of base polymer is not particularly limited, but from the viewpoint of low temperature dependence, rubbers such as silicone rubber, ethylene-propylene rubber (EP), ethylene-propylene-diene rubber (EPDM), isoprene rubber (IR), and acrylonitrile butadiene rubber (NBR) are desirable. Further, the amounts of the crosslinking agent, catalyst, foaming agent, or the like may be adjusted as appropriate such that the hardness, foaming ratio, or the like are within the desired range.

[Sheet member arranging step]

This step is a step in which a sheet member is arranged on the surface of the raw material composition arranged in the mold in the previous step. As the sheet member, for instance, a cloth formed from polyester such as polyethylene terephthalate (PET), resin film such as polyimide, resin fiber, or the like may be used. Among which, a material that adheres closely to the raw material composition during the foaming and hardening reaction process of the raw material composition and that does not easily adhere to the foam produced after the reaction is desirable. A polyimide film is suitable as such a material. The sheet member may be coated with a release agent or the like. In consideration of the ease of handling, the thickness of the sheet member is preferably 10 $\mu$m or more. Further, in consideration of the adhesion with the raw material composition and the influence on foaming and hardening reaction, it is desirable that the sheet member is thin, for instance, at 200 $\mu$m or less.

From the viewpoint of restricting the direction of the foaming reaction, the sheet member may be arranged on the surface of the raw material composition, but from the viewpoint of increasing the restricting force, it may also be arranged at the bottom of the mold. In this case, a sheet member may be arranged in advance at the bottom of the mold, and the raw material composition may be poured therein.

[Foam molding step]

This step is a step of foam molding the raw material composition with a surface covered with a sheet member. By covering the surface of the raw material composition with the sheet member, the foaming reaction in a surface direction (direction perpendicular to the thickness direction) is restricted, and bubbles can easily grow in the thickness direction. The temperature, pressure, time, or the like during foam molding may be appropriately determined according to the type of base polymer, taking into account the progress of the foaming reaction, hardening reaction, foaming ratio, or the like. The foam molding may be carried out in one step, or may be carried out in two or three stages by changing the conditions. For instance, as a first step, the foaming and hardening reactions may partially proceed at a temperature lower than a predetermined molding temperature, and then, as a second step, the foaming and hardening reactions may be completed at a predetermined molding temperature. In this case, if the time of the first stage is short, the hardening reaction is difficult to proceed so the foaming reaction progresses; on the other hand, if the time is long, the hardening reaction progresses so the foaming reaction is difficult to proceed. Thus, by changing the reaction time of the first stage, the foaming ratio or the like can be adjusted. After the foam molding is completed, the sheet member is peeled off to obtain a foam. Thereafter, heat treatment to keep the foam at a predetermined temperature may be performed, if necessary.

Example

Next, the disclosure will be described in more detail with reference to Examples.

<Manufacture of elastic member sample>

[Example 1]

The elastic member sample of Example 1 is manufactured in the following manner. First, 100 parts by mass of silicone rubber a ("TSE221-5U" manufactured by Momentive Performance Materials Japan, LLC) as a base polymer of the foam; 0.2 parts by mass of di-(4-methylbenzoyl) peroxide ("TC-12" manufactured by Momentive Performance Materials Japan, LLC) as crosslinking agent a; 1.4 parts by mass of 2,5-dimethyl-2,5-di(t-butylperoxy)hexane ("TC-8" manufactured by Momentive Performance Materials Japan, LLC) as crosslinking agent b; 3 parts by mass of 1,1'-azobis(1-acetoxy-1 phenylethane) ("OT AZO-15" manufactured by Otsuka Chemical Co., Ltd.) as a foaming agent are stirred at room temperature to prepare a raw material composition, which is poured into a mold (150t press machine) (raw material composition arranging step). A polyimide film ("Kapton (registered trademark) 50H" manufactured by DuPont-Toray Co., Ltd., thickness 12.5 $\mu$m) is previously laid on the bottom of the mold, and the raw material composition is poured onto it. Next, the same polyimide film as that laid on the bottom is arranged so as to cover the entire surface of the raw material composition (sheet member arranging step). A polyimide film is included in the concept of a sheet member in the manufacturing method of the disclosure.

The foam molding step is performed in two stages. In the first stage, foam molding is performed at a pressure of 150 t, a target thickness of 1 mm, and a temperature of 100° C for 3 minutes. Subsequently, as a second step, the foam molding is performed at a pressure of 150 t, a target thickness of 4.5 mm, and a temperature of 170° C for 10 minutes. After demolding, the polyimide film is peeled off from both the front and back surfaces of the obtained silicone rubber foam, and the silicone rubber foam is kept in an oven 200° C for 4 hours for heat treatment. In this way, a sheet-shaped silicone rubber foam (elastic member sample of Example 1) having a thickness of 4.5 mm is manufactured.

[Example 2]

In the manufacturing method of an elastic member sample of Example 1, the elastic member sample of Example 2 is manufactured in the same manner as Example 1, except that the base polymer of the foam is changed to silicone rubber b ("TSE221-7U" manufactured by Momentive Performance Materials Japan, LLC) and that the time of the first stage of the foam molding step is reduced to 1 minute.

[Example 3]

In the manufacturing method of an elastic member sample of Example 1, an elastic member sample of Example 3 is manufactured in the same manner as Example 1, except that the base polymer of the foam is changed to silicone rubber b (same as above) and that the time of the first stage of the foam molding step is reduced to 2 minutes.

[Example 4]

An elastic member sample of Example 4 is manufactured in the same manner as Example 1, except that the base polymer of the foam is changed to silicone rubber b (same as above).

[Example 5]

In the manufacturing method of an elastic member sample of Example 1, an elastic member sample as embodied example 5 is manufactured in the same manner as Example 1, except that the base polymer of the foam is changed to silicone rubber b (same as above) and that the time of the first stage of the foam molding step is extended for 4 minutes.

[Comparative example 1]

A high-foamed silicone rubber sheet "E15" manufactured by Tigers Polymer Corporation is prepared and used as an elastic member sample of Comparative example 1.

[Comparative example 2]

A low-foamed silicone rubber sheet "SPO-35R1" manufactured by Tigers Polymer Corporation is prepared and used as an elastic member sample of Comparative example 2.

[Comparative example 3]

A high-foamed silicone rubber sheet "HT-800" manufactured by INOAC Corporation is prepared as an elastic member sample of Comparative example 3.

<Evaluation method>

[Density]

The density of each sample is measured using a hydrometer "DSG-1" manufactured by Toyo Seiki Seisakusho, Ltd.

[Asker C hardness]

The Asker C hardness of the sample is measured using "Asker Durometer Type C" manufactured by Kobunshi Keiki Co., Ltd. For the measurement, a test piece with a thickness of 10 mm, which is separately manufactured for hardness measurement using the same manufacturing method, is used. Then, an indenter is pressed against the center of the test piece with a load of 1 kgf (9.81 N), and the value is measured after 3 seconds.

[Foaming ratio]

For the samples of Examples, the foaming ratio is calculated by dividing the density of the raw material composition by the density of each sample according to the above-mentioned formula (I). The density of the raw material composition is also measured using a hydrometer (same as above) manufactured by Toyo Seiki Seisaku-sho, Ltd. For the samples of the Comparative examples, a catalog value is used for the density of the sample, and the density of the raw material composition is calculated using an estimated value obtained by estimating the density of the solid body.

[Closed cell ratio]

The closed cell ratio is calculated using the measurement methods (i) to (iii) described above. Moreover, an estimated value is used for the density of the solid body in the samples of the Comparative examples.

[Bubble structure]

A cross-sectional photograph of each sample in the thickness direction is taken using a microscope at a magnification of 30 times, and the bubble structure is examined. For the cross-sectional photograph, binarization and noise removal are performed by image analysis using the No-Local Means Noising method. The binarization processing is performed at h: 13, Template: 21, Search: 35, BlockSize: 87, and C: 2, and noise removal is performed at noise: 500. Here, h is the strength of filter, Template is the size of the part to be searched, Search is the size of the area to be searched, BlockSize is the size of the area referenced to calculate the threshold, and C is the correction of the threshold. Then, the shape of bubble is recognized by measuring the aspect ratio (major axis (maximum length)/minor axis) of the remaining shape using a solidity of 0.84 as a threshold. In this example, the case where the aspect ratio is 1.4 or more is recognized as "elliptical", and the case where the aspect ratio is less than 1.4 is recognized as "circular". Moreover, all the bubbles recognized as "elliptical" in each sample exhibited an elongated elliptical shape in the thickness direction. On the other hand, in the bubbles recognized as "circular", the direction of the major axis is not constant, and no orientation in the thickness direction is observed. Further, a cross-sectional photograph of each sample in the thickness direction is taken using a microscope at a magnification of 100 times, the maximum length of each bubble observed is measured, and the average value is calculated as the average diameter.

[25% compressive stress]

According to the method C specified in JIS K6254:2016, the force required to compress each sample by 25% in the thickness direction (until the thickness became 3.4 mm) is measured. For the measurement, a rectangular parallelepiped test piece of 80 mm square and 4.5 mm thick, which is separately manufactured for compressive stress measurement using the same manufacturing method, is used.

<Measurement results>

Table 1 summarizes the composition of the raw material composition and the measurement results of the physical properties of each sample. For the comprehensive evaluation in Table 1, cases where all of the above-mentioned (a) to (d) are satisfied and the 25% compressive stress is 0.235 MPa or more and 1.015 MPa or less are indicated by a circle, and cases where any of the conditions are not satisfied are indicated by an x mark.

[Table 1]

| | | Example 1 | Example 2 | Example 3 | Example 4 | Example 5 | Comparative example 1 | Comparative example 2 | Comparative example 3 |
|---|---|---|---|---|---|---|---|---|---|
| Raw material composition of foam | Silicone rubber a | 100 | .. | -..- | .. | .. | .. | .. | .. |
| | Silicone rubber b | -.. | 100 | 100 | 100 | 100 | | | |
| | Crosslinking agent a | 02 | 02 | 02 | 02 | 02 | | | |
| | Crosslinking agent b | 1.4 | 1.4 | 1.4 | 1.4 | 1.4 | | | |
| | Foaming agent | 3 | 3 | 3 | 3 | 3 | | | |
| Foam (elastic member ) | Density [kg/m3] | 470 | 278 | 287 | 294 | 321 | 300 | 540 | 320 |
| | (a) Asker C hardness | 27 | 25 | 29 | 33 | 38 | 23 | 41 | 19 |
| | (b) Foaming ratio | 32 | 4.9 | 4.7 | 4.6 | 42 | 4.0 | 2.0 | 4.0 |
| | (C) Closed cell ratio [%] | 86.0 | 702 | 773 | 822 | 823 | 90.0 | 60.0 | 53.0 |
| | (d) Shape of bubble | elliptical | elliptical | elliptical | elliptical | elliptical | circular | elliptical | elliptical |
| | Aspect ratio of elliptical bubble | 1.5 | 1.9 | 2.1 | 2.0 | 1.7 | - | 1.5 | 1.9 |
| | Average diameter of bubble [ $\mu$m] | 327 | 419 | 508 | 535 | 471 | 279 | 312 | 431 |
| | 25% compressive stress [MPa] | 0.560 | 0295 | 0.427 | 0.557 | 0.691 | 0.150 | 1.109 | 0230 |
| | Comprehensive evaluation | ○ | ○ | ○ | ○ | ○ | X | X | X |

As shown in Table 1, the samples of Examples 1 to 5 satisfy all of (a) to (d), and the 25% compressive stress is 0.235 MPa or more and 1.015 MPa or less. As a result, it is confirmed that the samples of Examples 1 to 5 are preferable as the elastic member for battery pack. On the other hand, the sample of Comparative example 1 satisfies (a) to (c), but does not satisfy (d) because it does not have an elongated elliptical bubble in the thickness direction. For this reason, its compressive stress is smaller than that of the samples of Examples and the 25% compressive stress cannot be sufficiently obtained at low compression. Furthermore, since the 25% compressive stress is small, the amount of deformation increases during high compression, making it difficult to secure a sufficient distance between adjacent battery cells. Moreover, in the sample of Comparative example 2, the Asker C hardness is too large and the foaming ratio is too small, and does not satisfy (a) and (b). Thus, the 25% compressive stress becomes larger than the samples of Examples. Further, in the sample of Comparative example 3, the Asker C hardness is too small and does not satisfy (a). Thus, the25% compressive stress becomes smaller than the samples of Examples. From the above, it is confirmed that the samples of Comparative examples 1 to 3 are not suitable as an elastic member for battery pack.

Reference Signs List

1: Battery pack
10: Housing
2: Battery cell
3: Heat insulating material
4: Elastic member

## Claims

1. An elastic member for battery pack, arranged in a battery pack in which a plurality of battery cells are arranged side by side in a predetermined direction and is in elastic contact with the battery cells,
   wherein the elastic member for battery pack is made of a foam that satisfies following (a) to (d):

   (a) an Asker C hardness is 20 or more and 40 or less;
   (b) a foaming ratio is 3.0 times or more and 5.0 times or less;
   (c) a closed cell ratio is 50% or more and 95% or less; and
   (d) with a direction of elastic contact with the battery cells as a thickness direction, a structure of a bubble in a cross-section in the thickness direction has an elliptical bubble having an elongated elliptical shape in the thickness direction.

2. The elastic member for battery pack according to claim 1, wherein in the elliptical bubble, a ratio of a major axis to a minor axis (major axis/minor axis) is 1.4 or more and 3.0 or less.

3. The elastic member for battery pack according to claim 1, wherein in the foam, an average diameter of the bubble in the cross-section in the thickness direction is 250 $\mu$m or more and 600 $\mu$m or less.

4. The elastic member for battery pack according to claim 1, having a thickness of 3 mm or more and 5 mm or less.

5. A manufacturing method of an elastic member for battery pack according to claim 1, the method comprises:

   a raw material composition arranging step of arranging a raw material composition of the foam in a mold;
   a sheet member arranging step of arranging a sheet member on a surface of the raw material composition; and
   a foam molding step of foam molding the raw material composition with a surface covered with the sheet member.

Z direction

X direction

3   4   2   1

10

FIG. 1

## INTERNATIONAL SEARCH REPORT

| International application No. |
|---|
| **PCT/JP2023/031197** |

**A. CLASSIFICATION OF SUBJECT MATTER**

*H01M 50/293*(2021.01)i; *H01M 50/291*(2021.01)i
FI:   H01M50/293; H01M50/291

According to International Patent Classification (IPC) or to both national classification and IPC

**B. FIELDS SEARCHED**

Minimum documentation searched (classification system followed by classification symbols)

H01M50/293; H01M50/291

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 7024148 B1 (FUJI POLYMER IND) 22 February 2022 (2022-02-22)<br>claims | 1-5 |
| A | JP 2020-139062 A (SEKISUI CHEMICAL CO LTD) 03 September 2020 (2020-09-03)<br>claims | 1-5 |
| A | US 2021/0194041 A1 (ENEVATE CORP.) 24 June 2021 (2021-06-24)<br>entire text, all drawings | 1-5 |
| A | US 2022/0037728 A1 (SK INNOVATION CO., LTD.) 03 February 2022 (2022-02-03)<br>entire text, all drawings | 1-5 |
| P, A | JP 2022-175357 A (SHINETSU POLYMER CO) 25 November 2022 (2022-11-25)<br>claims | 1-5 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/031197**

| Patent document cited in search report | | | Publication date (day/month/year) | Patent family member(s) | | | Publication date (day/month/year) |
|---|---|---|---|---|---|---|---|
| JP | 7024148 | B1 | 22 February 2022 | WO 2022/224468 A1 claims | | | |
| JP | 2020-139062 | A | 03 September 2020 | (Family: none) | | | |
| US | 2021/0194041 | A1 | 24 June 2021 | WO 2021/126566 A1 entire text, all drawings CN 114830392 A | | | |
| US | 2022/0037728 | A1 | 03 February 2022 | EP 3945625 A1 entire text, all drawings KR 10-2022-0015250 A | | | |
| JP | 2022-175357 | A | 25 November 2022 | (Family: none) | | | |

Form PCT/ISA/210 (patent family annex) (January 2015)

**REFERENCES CITED IN THE DESCRIPTION**

**Patent documents cited in the description**

- JP 2021099940 A

- JP 2020064795 A